# EUROPÄISCHE PATENTSCHRIFT

(11) **EP 4 005 840 B1**
(45) Veröffentlichungstag und Bekanntmachung des Hinweises auf die Patenterteilung: **22.02.2023**
(21) Anmeldenummer: 21207554.3
(22) Anmeldetag: 10.11.2021
(51) Int. Cl.: B60J 7/22

(54) **WINDABWEISER ZUR GERÄUSCHREDUZIERUNG AN EINER DACHÖFFNUNG EINES FAHRZEUGS, SOWIE VERFAHREN ZUM HERSTELLEN EINES DERARTIGEN WINDABWEISERS**
WIND DEFLECTOR FOR REDUCING NOISE AT A ROOF OPENING OF A VEHICLE, AND METHOD FOR MANUFACTURING SUCH A WIND DEFLECTOR
DÉFLECTEUR POUR RÉDUIRE LE BRUIT DANS UNE OUVERTURE DE TOIT D'UN VÉHICULE, AINSI QUE PROCÉDÉ DE FABRICATION D'UN TEL DÉFLECTEUR

(30) Priorität: 25.11.2020 DE 102020214827
(43) Veröffentlichungstag der Anmeldung: 01.06.2022
(73) Patentinhaber: Magna Car Top Systems GmbH, 74321 Bietigheim-Bissingen (DE)
(72) Erfinder: SCHUMACHER, Thorsten, 25495 Kummerfeld (DE)
(74) Vertreter: Völger, Silke Beatrix

(56) Entgegenhaltungen:
- DE-A1-102005 054 185
- DE-A1-102008 057 799
- DE-A1-102013 011 872
- DE-U1-202017 102 016

## Beschreibung

Die vorliegende Erfindung betrifft ein Fahrzeug mit einem Windabweiser zur Geräuschreduzierung an einer Dachöffnung eines Fahrzeugs, sowie ein Verfahren zum Herstellen eines derartigen Windabweisers.

Windabweiser werden bei Schiebdächern von Kraftfahrzeugen eingesetzt und im Bereich des in Fahrtrichtung vorne liegenden Randbereichs einer Schiebedachöffnung bzw. Faltschiebedachöffnung angeordnet. Bei geöffnetem Schiebedach haben sie die Funktion Störgeräusche, die durch periodische Luftdruckschwankungen während des Fahrbetriebs entstehen, zu mindern oder bestenfalls zu unterdrücken.

Um dies zu erreichen sind eine Vielzahl von Bauformen bekannt. Üblich sind dabei die sogenannten Windabweiser mit einem schwenkbeweglich an einem karosseriefesten Grundelement angebundenen Bügelelement. Hierbei verläuft das Bügelelement über den gesamten vorderen Randbereich der Schiebedachöffnung und ist beidseits über entsprechende Lagerstellen an dem karosseriefesten Grundelement gelagert. Zwischen dem karosseriefest angebundenen Grundelement und dem Bügelelement ist dabei ein luftdurchlässiges flexibles Flächenelement befestigt, welches in der Regel ein textiles Netz ist. Das textile Netz wird beim Öffnen des Schiebedachs durch ein Verschwenken des Bügelelements in eine aufgestellte Position in einer Gebrauchsposition gespannt zwischen Grundelement und Bügelelement gehalten. Beim Verschließen des Schiebedachs schwenkt das Bügelelement wieder zurück in eine Grundposition in Richtung auf das Grundelement wodurch das textile Netz gefaltet wird.

Um eine möglichst optimierte Funktion hinsichtlich der Vermeidung von störenden Wummergeräuschen, Vibrationen zu erzielen, sind Ausführungsformen bekannt, bei denen das textile Netz ausgehend von dem vorderen Randbereich der Dachöffnung beidseits seitlich um die vorderen Eckbereiche herum verlaufend angeordnet ist. Eine Anbindung der seitlichen Bereiche des Netzes an das Bügelelement bzw. das Grundelement ist aufgrund des hohen Fertigungs- und Montageaufwands nicht oder nur unzureichend hergestellt.

Aus der DE 10 2005 054 186 A1 ist eine Ausführung eines Windabweisers eines Kraftfahrzeugs bekannt. Dieser Windabweiser weist ein bügelförmiges Basiselement auf, welches an einem Kraftfahrzeugteil anbringbar ist, einen Aussteller, welcher an dem Basiselement verschwenkbar angelenkt ist und ein netzartiges Abweiserelement auf. Das Abweiserelement ist an dem Basiselement und dem Aufsteller mittels einer lösbaren Verbindung angebunden.

Des Weiteren ist aus der DE 10 2014 19 272 A1 ein Windabweiser zur Geräuschminderung sowie ein Verfahren zur Herstellung eines Windabweisers bekannt. Dieser Windabweiser umfasst ein Windabweiser-Textilnetz, welches durch eine obere angespritzte Netzleiste mit einer Sichtfläche berandet ist.

Das Dokument DE 10 2014 012 885 A1 offenbart einen Windabweiser für ein Kraftfahrzeug, welcher zumindest ein netzartiges Abweiserelement und einen bügelartigen beweglich am Kraftfahrzeug gelagerten Aussteller aufweist. Das Abweiserelement ist zumindest an dem oberen Randbereich in ein Verstärkungselement eingebettet. Der bügelartige Aussteller umschließt das Verstärkungselement.

Das Dokument DE 20 2017 102 016 U offenbart ebenfalls einen ausstellbaren Windabweiser für ein Kraftfahrzeug. Ein Zuschnitt aus einem netzartigen faltbaren Material ist an seinen oberen und unteren Längsränder mit Randleisten versehen. Die beiden Randleisten sind nach einem Kunststoffspritzgießverfahren an den Zuschnitt angebunden. Die Randleiste gehen beidseits in einen Endabschnitt E über, der gegenüber dem Mittelabschnitt M eine verringerte Biegesteifigkeit hat. Hierdurch ist es möglich, den Zuschnitt aus dem faltbaren Material in einer im Wesentlichen ebenen Anordnung in einen Formhohlraum eines Spritzgießwerkzeugs zur Herstellung der betreffenden Randleiste einzulegen. Die Randleiste kann nach dem Entformen aus dem Spritzgießwerkzeug bei der Montage an dem Ausstellbügel bzw. der fahrzeugfesten Basis in den Endabschnitten gebogen werden und so an den gewünschten Verlauf des Windabweiserelements in der Einbaulage angepasst werden.

Vor diesem Hintergrund stellt sich die vorliegende Erfindung unter einem ersten Aspekt die Aufgabe, einFahrzeug mit einem Windabweiser der eingangs genannten Art derart weiterzubilden, dass der Windabweiser einen einfach herzustellenden Aufbau hat und gleichzeitig hinsichtlich seiner Funktion - der Unterdrückung bzw. Minderung der akustischen Störgeräusche - wesentlich verbessert wird.

Unter einem zweiten Aspekt stellt sich die Erfindung die Aufgabe ein Verfahren zum Herstellen eines derartigen Windabweisers bereitzustellen, welches mit verringertem Herstellungsaufwand und geringeren Produktionskosten durchführbar ist.

Diese Aufgabe unter dem ersten Aspekt löst die vorliegende Erfindung durch ein Fahrzeug mit einem Windabweiser mit den in Patentanspruch 1 angegebenen Merkmalen. Durch die Ausgestaltung des Windabweisers mit einer seitlichen Netzanbindung wird die Geräusche reduzierende Diffusorwirkung des Windabweisers deutlich erhöht. Die seitlichen Bereiche des luftdurchlässigen Flächenelements umfassen obere und untere angespritzte Montagleisten, die eine einfache Fertigung und einen schnellen Zusammenbau des Windabweisers ermöglichen.

Die oberen schräg verlaufenden seitlichen Randbereiche der seitlichen Flächenabschnitte des luftdurchlässigen Flächenelements sind über die angespritzten Montageleisten an den Aufstellarmen des Aufstellbügelelements befestigt.

Die unteren seitlichen Randbereiche der seitlichen Flächenabschnitte sind über die angespritzten Montageleisten an den Seitenschenkeln des Grundelements oder an den die Dachöffnung begrenzenden seitlichen karosseriefesten Elementen befestigt.

In einer bevorzugten Ausführungsform können die Montageleisten unlösbar an den anzubindenden Bauteilen des Windabweisers befestigt sein. Die Befestigung kann beispielsweise durch Schweißverfahren bspw. Ultraschallschweißen oder Kleben hergestellt werden.

Eine weitere bevorzugte Ausführungsform sieht eine lösbare Befestigung der seitlichen Flächenabschnitte an den Seitenschenkeln bzw. an den Aufstellarmen vor. Hierfür weisen die oberen und unteren angespritzten Montageleisten entsprechende Raststellen bzw. Rastausnehmungen auf, die mit korrespondierenden Rastausnehmungen bzw. Raststellen zur Herstellung einer Rastverbindung zusammenwirken können.

Die oberen seitlichen Montageleisten werden hierbei mittels einer Rastverbindung an seitlichen Schenkeln des Aufstellbügelelements befestigt. Die unteren seitlichen Montageleisten werden mittels einer Rastverbindung an seitlichen Schenkeln des Grundelements oder alternativ an den seitlichen Führungsschienen befestigt. Dies ermöglicht eine schnelle und werkzeuglose Montage des Windabweisers.

Die Aufgabe unter dem zweiten Aspekt löst die Erfindung durch ein Verfahren zur Herstellung eines Windabweisers nach Patentanspruch 4.

Durch das Anspritzen der Montagleisten an den seitlichen oberen und unteren Randbereichen des Flächenelements in einem Spritzgießverfahren in einer Werkzeugform, bei dem gleichzeitig das u-förmige Grundelement an dem vorderen unteren Randbereich und das u-förmige Aufstellbügelelement an dem vorderen oberen Randbereich angespritzt wird, wird das Herstellverfahren wesentlich vereinfacht, was erhebliche Kostenvorteile mit sich bringt.

Die Ausbildung der angespritzten Montagleisten mit Befestigungselementen, vorzugsweise Raststellen in Form von Rastnasen, ermöglicht eine einfache Befestigung der seitlichen Bereiche des luftdurchlässigen, flexiblen Flächenelements an dem Grundelement des Windabweisers bzw. an den seitlichen Führungsschienen des Faltschiebedachs sowie an dem Aufstellbügelelement bei dem Zusammenbau des Windabweisers. Hierbei werden keine weiteren Werkzeuge benötigt, so dass die Befestigung einfach und schnell herzustellen ist.

Vorteilhafte Ausgestaltungen der vorliegenden Erfindung sind in den entsprechenden Unteransprüchen angegeben.

Die Erfindung wird nachfolgend anhand in den Zeichnungen schematisch dargestellter Ausführungsbeispiele beschrieben.

Es zeigt:
Fig. 1 eine Draufsicht auf ein Faltschiebedachsystem eines Kraftfahrzeugs,
Fig. 2 eine perspektivische Ansicht auf einen Windabweiser in der Gebrauchsposition
Fig. 3 eine Darstellung eines Windabweisers vor der Montage und dem Zusammenbau nach dem Spritzgießverfahren
Fig. 4 einen vergrößerten Ausschnitt eines Details der Figur 3

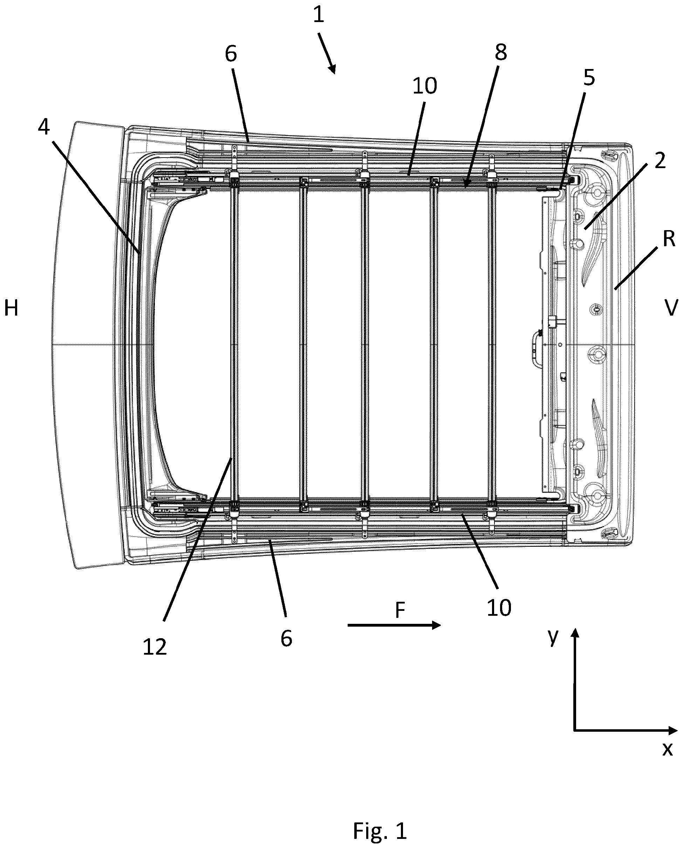

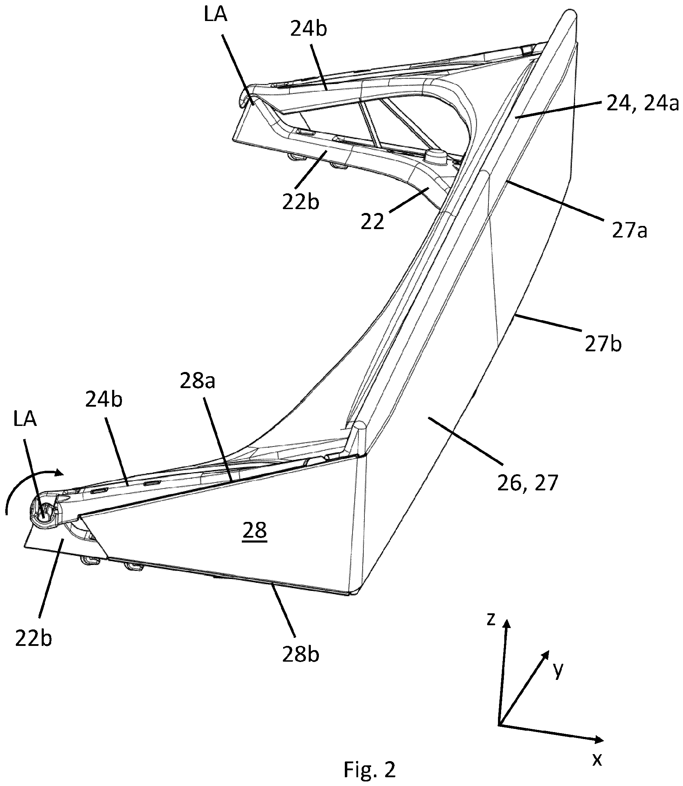

Der nachfolgend anhand der Figuren 2 - 4 beschriebene Windabweiser 20 wird üblicherweise im Bereich des in Fahrtrichtung F (angezeigt durch den Pfeil in der Figur 1) vorne liegenden Randes R einer Schiebdachöffnung bzw. Faltschiebedachöffnung zur Vermeidung bzw. Verminderung von Windgeräuschen angeordnet.

Faltschiebedachsysteme sind hinsichtlich der Funktion und des Aufbaus grundsätzlich bekannt. In der Figur 1 ist das Faltschiebedachsystem 1 als Baugruppe in einer Ansicht von oben dargestellt. Bei dem Einbau in einem nicht dargestellten Kraftfahrzeug erstreckt sich das Faltschiebedachsystem 1 ausgehend von der Vorderseite V in einen Heckbereich H des Fahrzeugs. Es umfasst einen eine Dachöffnung des Kraftfahrzeugs begrenzenden umlaufenden Rahmen mit einem den vorderen Rand R bildenden vorderen Querholm 2, einem hinteren Querholm 4 und seitlichen den vorderen und hinteren Querholm verbindenden Dachseitenholmen 6. Die Verbindungsstelle zwischen vorderem Querholm 2 und den Dachseitenholmen 6 bildet vordere Eckbereiche 5 aus. Die Dachseitenholme 6 sind mit Führungsschienen 10 ausgeführt, die eine Verstellung eines Faltschiebedachs 8 von einer in der Figur 1 gezeigten Schließstellung, in der die Dachöffnung verschlossen ist, in eine Offenstellung ermöglichen. In der Offenstellung ist das Faltschiebedach 8 in den rückwärtigen Dachbereich/Heckbereich verschoben und gibt die Dachöffnung frei.

Wie es aus der Figur 1 zu ersehen ist, weist das Faltschiebedach 8 eine Vielzahl von in den Führungsschienen 10 verschieblich gelagerten Spriegeln 12 auf, die sich jeweils von der einen Führungsschiene 10 zur gegenüberliegenden Führungsschiene 10 in Querrichtung erstrecken und die zum Aufspannen eines zeichnerisch nicht dargestellten Verdeckstoffs in der gezeigten Schließstellung dienen. Mit Hilfe der Spriegel 12 ist der Verdeckstoff zwischen der Offenstellung und der Schließstellung verstellbar.

Beim Verstellen des Faltschiebedachs 8 längs der Führungsschienen 10 ausgehend von der Schließstellung in die Offenstellung wird der nachfolgend beschriebene Windabweiser 20 automatisch von einer Grundstellung in eine Gebrauchsstellung verlagert. In der Draufsicht auf das Faltschiebedachsystem 1 gemäß der Figur 1 ist der Windabweiser 20 nicht dargestellt. Der Windabweiser 20 erstreckt sich in der montierten Situation entlang der y- Richtung im Bereich des vorderen Randes R des vorderen Querholms 2 sowie um die vorderen Eckbereiche 5 in die seitlichen Bereiche der Dachöffnung an den Dachseitenholmen 6.

Die x-, y- und z- Richtung bezeichnet die üblichen Fahrzeugkoordinaten, dabei entspricht die x- Richtung der Längsrichtung, die y- Richtung der Querrichtung des Kraftfahrzeugs und die z- Richtung der Hochrichtung.

Der erfindungsgemäße Windabweiser 20 ist in einer perspektivischen Darstellung aus der Figur 2 ersichtlich. Der Windabweiser 20 umfasst ein u-förmig ausgeführtes Grundelement 22, ein u-förmig ausgeführtes Aufstellbügelelement 24, sowie ein luftdurchlässiges, flexibles Flächenelement 26.

Das Grundelement 22 umfasst einen mittleren Schenkel 22a der sich in der montierten Situation am Kraftfahrzeug im Wesentlichen an dem in Fahrtrichtung vorne liegenden Rand R der Dachöffnung (y-Achse/Querrichtung) erstreckt. Die beiden kurzen Seitenschenkel 22b des Grundelements 22 weisen seitlich im Bereich der Dachseitenholme 6 nach hinten.

Das Aufstellbügelelement 24 umfasst einen mittleren Schenkel 24a, der sich in der montierten Situation am Kraftfahrzeug ebenfalls im Wesentlichen an dem in Fahrtrichtung vorne liegenden Rand der Dachöffnung (y-Achse/Querrichtung) erstreckt und ist in z- Richtung gesehen über dem Grundelement 22 angeordnet. Die beiden kurzen Seitenschenkel des Aufstellbügelelements 24 weisen seitlich im Bereich der Dachseitenholme 6 nach hinten und bilden sogenannte Aufstellarme 24b. An den nach hinten weisenden Endbereichen der Aufstellarme 24b sind Lagerstellen vorgesehen, über die das Aufstellbügelelement 24 um eine querverlaufende Lagerachse LA ausgehend von einer Grundposition, in die in der Figur 2 gezeigte Gebrauchsposition verschwenkbar ist. Die Gegenlagerstelle ist karosseriefest angebunden.

Die zugeordnete Lagerung und entsprechende Kinematik zum Verschwenken des Aufstellbügelelements 24 ist bekannt und wird an dieser Stelle nicht näher beschrieben.

Das Grundelement 22 sowie das Aufstellbügelelement 24 sind als Kunststoffspritzgussteil ausgeführt. Die Ausführung des Grundelements sowie des Aufstellbügelelements können Verstärkungselemente aus einem Metall enthalten.

Das luftdurchlässige, flexible Flächenelement 26 weist einen mittleren Flächenabschnitt 27 und daran anschließende seitliche Flächenabschnitte 28 auf. Der mittlere Flächenabschnitt 27 ist im Wesentlichen streifenförmig ausgestaltet und umfasst einen oberen Randbereich 27a, einen unteren Randbereich 27b. Die seitlichen Flächenabschnitte 28 sind im Wesentlichen dreieckig ausgeführt und umfassen einen oberen schräg verlaufenden seitlichen Randbereich 28a, einen unteren seitlichen Randbereich 28b.

Das luftdurchlässige, flexible Flächenelement 26 ist vorzugsweise aus einem textilen Netzmaterial oder einem luftdurchlässigen Gewirke aus einem Stoff ausgeführt.

In der in der Figur 2 dargestellten Gebrauchsposition ist der Aufstellbügel 24 in einer aufgestellten in z-Richtung nach oben geschwenkten Position, wodurch das luftdurchlässige, flexible Flächenelement 26 zwischen Grundelement 22 und Aufstellbügelelement 24 aufgespannt gehalten ist. Das Grundelement 22 und das Aufstellbügelelement 24 bilden hierbei einen das Flächenelement 26 im Wesentlichen umlaufenden Rahmen. Hierfür ist das luftdurchlässige, flexible Flächenelement 26 mit seinem oberen Randbereich 27a an dem mittleren Schenkel 24a des Aufstellbügelelement 24 fest angebunden. Des Weiteren ist das luftdurchlässige, flexible Flächenelement 26 mit seinem unteren Randbereich 27b an dem mittleren Schenkel 22a Grundelements 22 fest angebunden. Um diese feste Anbindung zu erzielen sind die beiden Randbereiche 27a, 27b an dem entsprechend zugeordneten Bauteil umspritzt gehalten. Die oberen schräg verlaufenden seitlichen Randbereich 28a verlaufen dabei ausgehend von dem oberen Randbereich abfallend nach hinten zu dem Endbereich des Ausstellarms 24b im Bereich der Lagerstelle LA.

Die seitlichen Flächenabschnitte 28 des luftdurchlässigen, flexiblen Flächenelements 26 sind lösbar einerseits an dem Aufstellbügelelement 24 und andererseits an dem Grundelement 22 oder an zu dem Grundelement 22 benachbarten Bereichen der Führungsschienen 10 angebunden. Eine lösbare Befestigung der seitlichen Flächenabschnitte 28 des luftdurchlässigen, flexiblen Flächenelements 26 an den seitlichen Aufstellarmen 24b sowie den Seitenschenkeln 22b erfolgt über an den seitlichen Flächenabschnitten 28 angespritzte Montageleisten 30. Die Montageleisten 30 umfassen hierfür entsprechende Befestigungsbereiche. Die Befestigungsbereiche sind als Raststellen 32, die beispielsweise als Rastnasen 34 ausgebildet sind, ausgeführt. Zu den Raststellen 32 sind korrespondierende Gegenraststellen 36 an dem Aufstellbügelelement 24 bzw. an dem Grundelement 22 oder alternativ im Bereich der Führungsschienen 10 angeordnet. Die Gegenraststellen 36 sind als Rastausnehmungen 38 ausgeführt.

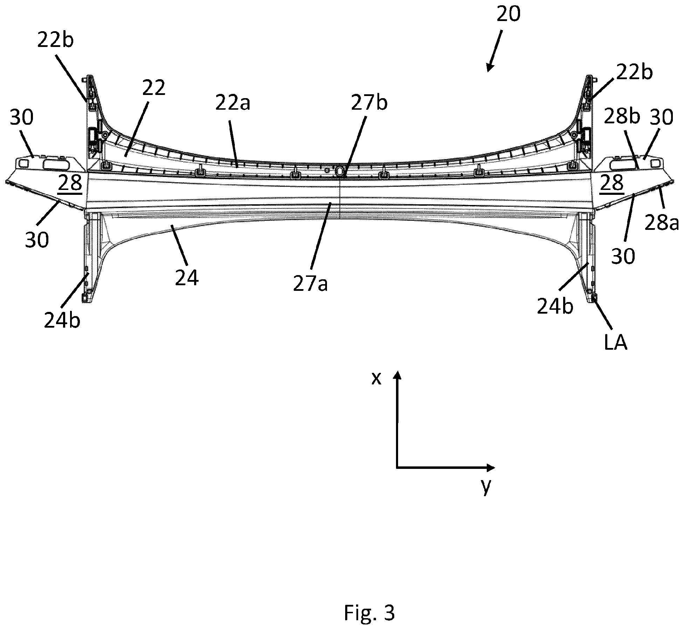

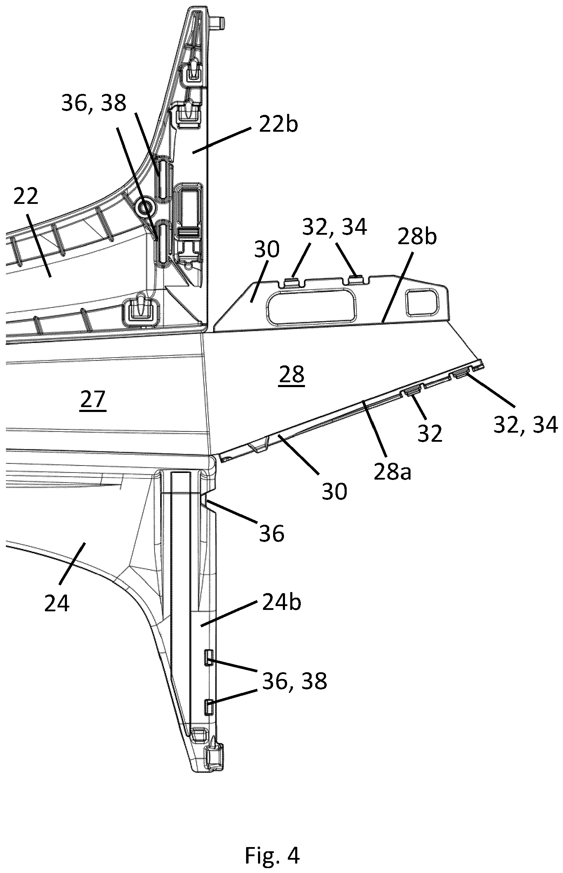

Die Montageleisten 30 sind aus den Figuren 3 und der Detaildarstellung der Figur 4 ersichtlich.

Zur Herstellung des Windabweisers 2 wird ein flächiges luftdurchlässiges und flexibles Flächenelement 26, welches einen mittleren Flächenabschnitt 27 und seitliche Flügelabschnitte in Form von im Wesentlichen dreieckigen seitlichen Flächenabschnitten 28 aufweist, in eine Kavität einer unteren Hälfte einer Werkzeugform eingelegt und dort in Position fixiert. Die Werkzeugform ist zweiteilig ausgebildet und derart hinsichtlich ihrer Formgebung ausgeführt, dass in einem Spritzgießverfahren gleichzeitig das Grundelement 22 an den unteren Randbereich 27b, das Aufstellbügelelement 24 an den oberen Randbereich 27a des Flächenelements angespritzt werden und weiterhin die in den Figuren 3 und 4 gezeigten Montageleisten 30 an den oberen schräg verlaufenden seitlichen Randbereichen 27a und an den unteren seitlichen Randbereichen 28b der seitlichen Flächenabschnitte 28 angespritzt werden.

Zum Spritzgießen wird die zweigeteilte Werkzeugform mit darin positioniertem Flächenelement 26 geschlossen und das Kunststoffmaterial über entsprechende Spritzgießkanäle eingespritzt. Nach dem Aushärten wird die Werkzeugform wieder geöffnet und der Windabweiser 20 kann (wie es in der Figur 3 dargestellt ist) zur weiteren Montage entnommen werden.

Die Figur 3 zeigt den Windabweiser in einer Situation nach dem Spritzgießverfahren. Hier kann man deutlich erkennen, dass das Flächenelement 26 mit seinem oberen Randbereich und seinem unteren Randbereich eingespritzt an dem Aufstellbügelelement bzw. dem Grundelement angebunden ist. Das Aufstellbügelelement 24 ist in der Zeichnung auf der unteren Seite liegend angeordnet, die Aufstellarme 24b zeigen in x-Richtung nach unten.

Das Grundelement 22 ist auf der oberen Seite des Flächenelementes gezeigt, die Seitenschenkel 22b weisen mit ihren Endbereichen in x- Richtung nach oben. Die im Wesentlichen dreieckigen Flächenabschnitte 28 erstrecken sich ausgehend von dem mittleren Flächenabschnitt 27 in y- Richtung seitlich nach links und rechts außen.

Die Montageleisten 30 sind jeweils an den oberen schräg verlaufenden seitlichen Randbereichen 28a sowie den unteren seitlichen Randbereichen 28b aus einem Kunststoffmaterial angespritzt angebunden. Die zuvor beschriebenen Raststellen 32 mit Rastnasen 34 und Gegenraststellen 36 mit Rastausnehmungen lassen sich insbesondere aus der Detaildarstellung erkennen.

Nach dem Spritzgießverfahren zur Herstellung des Windabweisers, wird der Windabweiser, wie er in der Figur 3 gezeigt ist aus der Werkzeugform entnommen.

Zur Endmontage werden die seitlichen Montageleisten 30 mittels ihrer Rastnasen 34 in die zugeordneten Rastausnehmungen 38 an den Aufstellarmen 24b bzw. den Seitenschenkeln 22b verrastet.

In der Grundposition des Windabweisers, die nicht zeichnerisch dargestellt ist, liegt das Aufstellbügelelement 24 in einer nach unten verschwenkten Position auf dem Grundelement 22 auf, wodurch sich das luftdurchlässige Flächenelement 26 entspannt und zwischen diesen Bauteilen gefaltet liegt.

Die gezeigte erfindungsgemäße Ausführungsform zeigt Montageleisten mit Befestigungsbereichen, die eine lösbare Anbindung ermöglichen. Insbesondere lässt sich mittels der Befestigungsbereiche eine Clipsverbindung realisieren.

Alternativ zu den in den Figuren gezeigten Montageleisten 30 können die Montageleisten auch mit Befestigungsbereichen ausgeführt sein, die eine unlösbare Anbindung an die Bauteile des Windabweisers ermöglichen. Die Befestigung kann dann beispielsweise durch Schweißverfahren bspw. Ultraschallschweißen oder Kleben hergestellt werden.

### Bezugszeichenliste

- 1: Faltschiebedachsystem
- 2: vorderer Querholm
- 4: hinterer Querholm
- 5: vordere Eckbereiche
- 6: Dachseitenholme
- 8: Faltschiebedach
- 10: Führungsschienen
- 12: Spriegel
- 20: Windabweiser
- 22: Grundelement
- 22a: mittlerer Schenkel
- 22b: Seitenschenkel
- 24: Aufstellbügelelement
- 24a: mittlerer Schenkel
- 24b: Aufstellarme
- 26: luftdurchlässiges, flexibles Flächenelement
- 27: mittlerer Flächenabschnitt
- 27a: oberer Randbereich
- 27b: unterer Randbereich
- 28: seitliche Flächenabschnitte
- 28a: oberer schräg verlaufender seitlicher Randbereich
- 28b: unterer seitlicher Randbereich
- 30: Montageleisten
- 32: Raststellen
- 34: Rastnase
- 36: Gegenraststellen
- 38: Rastausnehmung

## Patentansprüche

1. Fahrzeug mit einem Windabweiser (20) zur Geräuschreduzierung an einer Dachöffnung des Fahrzeugs,
- mit einem u-förmig ausgeführten Grundelement (22), welches einen mittleren Schenkel (22a) und Seitenschenkel (22b) umfasst und karosseriefest im Bereich der vorderen Dachöffnung angebracht ist
- mit einem Aufstellbügelelement (24), welches einen mittleren Schenkel (24a) und seitliche Aufstellarme (24b) umfasst, wobei das Aufstellbügelelement (24) verschwenkbar gegenüber dem Grundelement (22) in eine Gebrauchsposition aufstellbar ist
- mit einem luftdurchlässigen, flexiblen Flächenelement (26), welches einen mittleren Flächenabschnitt (27) mit einem oberen Randbereich (27a) und einem unteren Randbereich (27b) sowie beidseits seitliche Flächenabschnitte (28) umfasst, wobei die Flächenabschnitte (28) flügelförmig ausgebildet sind und einen oberen schräg verlaufenden seitlichen Randbereich (28a) und einen unteren seitlichen Randbereich (28b) umfassen,
- wobei das luftdurchlässige, flexible Flächenelement (26) mittels seines oberen Randbereichs (27a) an dem mittleren Schenkel (24a) des Aufstellbügelelements (24) angebunden ist
- wobei das luftdurchlässige, flexible Flächenelement (26) mittels seines unteren Randbereichs (27b) an dem mittleren Schenkel (22a) des Grundelements (22) angebunden ist
- wobei das Flächenelement (26) in der Gebrauchsposition zwischen dem Grundelement (22) und dem Aufstellbügelelement (24) sowohl in dem mittleren Flächenabschnitt (27) als auch in den seitlichen Flächenabschnitten (28) gespannt gehalten ist,
- wobei die oberen schräg verlaufenden seitlichen Randbereiche (28a) der seitlichen Flächenabschnitte (28) an den Aufstellarmen (24b) befestigt sind und
- wobei die unteren seitlichen Randbereiche (28b) der seitlichen Flächenabschnitte (28) an den Seitenschenkeln (22b) oder an die Dachöffnung begrenzenden seitlichen karosseriefesten Elementen angebunden sind,
**dadurch gekennzeichnet,**
- **dass** das luftdurchlässige, flexible Flächenelement (26) mit seinem oberen Randbereich (27a) angespritzt an dem Aufstellbügelelement (24) angebunden ist,
- **dass** das luftdurchlässige, flexible Flächenelement (26) mit seinem unteren Randbereich (27b) angespritzt an dem Grundelement (22) angebunden ist,
- **dass** die oberen schräg verlaufenden seitlichen Randbereiche (28a) der seitlichen Flächenabschnitte (28) über angespritzte Montageleisten (30) an den Aufstellarmen (24b) befestigt sind und
- **dass** die unteren seitlichen Randbereiche (28b) der seitlichen Flächenabschnitte (28) über angespritzte Montageleisten (30) an den Seitenschenkeln (22b) oder an die Dachöffnung begrenzenden seitlichen karosseriefesten Elementen angebunden sind.

2. Fahrzeug mit einem Windabweiser (20) nach Anspruch 1, **dadurch gekennzeichnet, dass** die Befestigung der oberen seitlichen Randbereiche (28a) und der unteren seitlichen Randbereiche (28b) an den Aufstellarmen (24b) bzw. den Seitenschenkeln (22b) unlösbar ausgebildet ist.

3. Fahrzeug mit einem Windabweiser (20) nach Anspruch 1, **dadurch gekennzeichnet, dass** die Befestigungen der oberen seitlichen Randbereiche (28a) und der unteren seitlichen Randbereiche (28b) an den Aufstellarmen (24b) bzw. den Seitenschenkeln (22b) lösbar über Rastverbindungen ausgebildet sind, und hierfür die Montageleisten (30) Befestigungsabschnitte aufweisen, die eine Anzahl Raststellen (32) umfassen, die in entsprechende Gegenraststellen (36) an den Aufstellarmen (24b) bzw. Seitenschenkeln (22b) rastend eingreifen.

4. Verfahren zum Herstellen eines Windabweisers nach einem der Ansprüche 1 - 3 mit den Schritten:
- Bereitstellen des luftdurchlässigen, flexiblen Flächenelements (26)
- Einlegen und Positionieren des Flächenelements (26) in eine zweigeteilte Werkzeugform für ein Spritzgießverfahren
- Schließen der Werkzeugform und Einspritzen von Kunststoffmaterial, wobei das Grundelement (22) gespritzt und der untere Randbereich (27b) des Flächenelement zur Herstellung einer stoffschlüssigen Verbindung umspritzt wird,
- das Aufstellbügelelement (24) gespritzt und der obere Randbereich (27a) des Flächenelement (26) zur Herstellung einer stoffschlüssigen Verbindung umspritzt wird,
- an die oberen schräg verlaufenden seitlichen Randbereiche (28a) sowie an die unteren seitlichen Randbereiche (28b) Montageleisten (30) mit Befestigungsbereichen angespritzt werden.

5. Verfahren zum Herstellen eines Windabweisers (20) nach Anspruch 4, **dadurch gekennzeichnet, dass** die Befestigungsbereiche zur Herstellung einer lösbaren Rastverbindung ausgebildet werden und eine Anzahl Raststellen (30) umfassen und dass die Seitenschenkel (22b) und die Aufstellarme (24b) beim Spritzgießen mit korrespondierenden Gegenraststellen (36) hergestellt werden.

6. Verfahren zum Herstellen eines Windabweisers (20) nach Anspruch 4, **dadurch gekennzeichnet, dass** die Befestigungsbereiche zur Herstellung einer unlösbaren Befestigung zwischen den Montageleisten (30) und den Seitenschenkeln (22b) bzw. den Aufstellarmen (24b) ausgebildet werden.

## Claims

1. Vehicle having a wind deflector (20) for reducing noise at a roof opening of the vehicle,
- having a base element (22) of u-shaped form, which comprises a middle limb (22a) and side limbs (22b) and is attached in the region of the front roof opening so as to be fixed with respect to the vehicle body,
- having a setting-up clip element (24), which comprises a middle limb (24a) and side setting-up arms (24b), wherein the setting-up clip element (24) is able to be set up into a position of use in a manner pivotable in relation to the base element (22),
- having an air-permeable, flexible surface element (26), which comprises a middle surface portion (27) with an upper edge region (27a) and lower edge region (27b) and also comprises side surface portions (28) on both sides, wherein the surface portions (28) are of wing-shaped form and comprise an upper obliquely extending side edge region (28a) and a lower side edge region (28b),
- wherein the air-permeable, flexible surface element (26) is attached by means of its upper edge region (27a) to the middle limb (24a) of the setting-up clip element (24),
- wherein the air-permeable, flexible surface element (26) is attached by means of its lower edge region (27b) to the middle limb (22a) of the base element (22),
- wherein, in the position of use, the surface element (26) is held taut between the base element (22) and the setting-up clip element (24) both in the middle surface portion (27) and in the side surface portions (28),
- wherein the upper obliquely extending side edge regions (28a) of the side surface portions (28) are fastened to the setting-up arms (24b), and
- wherein the lower side edge regions (28b) of the side surface portions (28) are attached to the side limbs (22b) or to side elements which delimit the roof opening and which are fixed with respect to the vehicle body,
**characterized**
- **in that** the air-permeable, flexible surface element (26) is attached by way of its upper edge region (27a) to the setting-up clip element (24) so as to be injection-moulded thereon,
- **in that** the air-permeable, flexible surface element (26) is attached by way of its lower edge region (27b) to the base element (22) so as to be injection-moulded thereon,
- **in that** the upper obliquely extending side edge regions (28a) of the side surface portions (28) are fastened via mounting strips (30) injection-moulded thereon to the setting-up arms (24b), and
- **in that** the lower side edge regions (28b) of the side surface portions (28) are attached via mounting strips (30) injection-moulded thereon to the side arms (22b) or to side elements which delimit the roof opening and which are fixed with respect to the vehicle body.

2. Vehicle having a wind deflector (20) according to Claim 1, **characterized in that** the fastening of the upper side edge regions (28a) and the lower side edge regions (28b) to the setting-up arms (24b) and the side limbs (22b), respectively, is of non-releasable form.

3. Vehicle having a wind deflector (20) according to Claim 1, **characterized in that** the fastenings of the upper side edge regions (28a) and the lower side edge regions (28b) to the setting-up arms (24b) and the side limbs (22b), respectively, are formed in a manner releasable via latching connections and, for this purpose, the mounting strips (30) have fastening portions comprising a number of latching points (32) which engage in a latching manner into corresponding counterpart latching points (36) on the setting-up arms (24b) and side limbs (22b), respectively.

4. Method for producing a wind deflector according to one of Claims 1-3, comprising the steps of:
- providing the air-permeable, flexible surface element (26),
- placing and positioning the surface element (26) into a two-part tool mould for an injection-moulding process,
- closing the tool mould and injecting plastic material, wherein the base element (22) is injection-moulded and the lower edge region (27b) of the surface element, for producing a materially bonded connection, is encapsulated,
- the setting-up clip element (24) is injection-moulded and the upper edge region (27a) of the surface element (26), for producing a materially bonded connection, is encapsulated,
- mounting strips (30) with fastening regions are injection-moulded onto the upper obliquely extending side edge regions (28a) and onto the lower side edge regions (28b).

5. Method for producing a wind deflector (20) according to Claim 4, **characterized in that** the fastening regions are configured for producing a releasable latching connection and comprise a number of latching points (30), and **in that** the side limbs (22b) and the setting-up arms (24b) are produced with corresponding counterpart latching points (36) during the injection moulding.

6. Method for producing a wind deflector (20) according to Claim 4, **characterized in that** the fastening regions are configured for producing a non-releasable fastening between the mounting strips (30) and the side limbs (22b) and the setting-up arms (24b).

## Revendications

1. Véhicule avec un déflecteur (20) pour réduire le bruit dans une ouverture de toit du véhicule,
- avec un élément de base (22) conçu en forme de U, qui comprend une branche centrale (22a) et des branches latérales (22b) et qui est disposé de manière solidaire de la carrosserie dans la zone de l'ouverture de toit avant,
- avec un élément d'arceau de montage (24), qui comprend une branche centrale (24a) et des bras de montage latéraux (24b), l'élément d'arceau de montage (24) pouvant être monté de manière pivotante par rapport à l'élément de base (22) dans une position d'utilisation,
- avec un élément plat flexible (26), perméable à l'air, qui comprend une section plate centrale (27) avec une zone de bord supérieure (27a) et une zone de bord inférieure (27b) ainsi que des sections plates latérales (28) des deux côtés, les sections plates (28) étant configurées en forme d'ailette et comprenant une zone de bord latérale supérieure s'étendant en oblique (28a) et une zone de bord latérale inférieure (28b),
- l'élément plat flexible (26) perméable à l'air étant relié au moyen de sa zone de bord supérieure (27a) à la branche centrale (24a) de l'élément d'arceau de montage (24),
- l'élément plat flexible (26) perméable à l'air étant relié au moyen de sa zone de bord inférieure (27b) à la branche centrale (22a) de l'élément de base (22),
- l'élément plat (26) étant maintenu tendu dans la position d'utilisation entre l'élément de base (22) et l'élément d'arceau de montage (24) aussi bien dans la section plate centrale (27) que dans les sections plates latérales (28),
- les zones de bord latérales supérieures s'étendant en oblique (28a) des sections plates latérales (28) étant fixées aux bras de montage (24b) et
- les zones de bord latérales inférieures (28b) des sections plates latérales (28) étant fixées aux branches latérales (22b) ou aux éléments latéraux solidaires de la carrosserie qui délimitent l'ouverture de toit,
**caractérisé**
- **en ce que** l'élément plat flexible (26) perméable à l'air est relié par sa zone de bord supérieure (27a) moulée par injection à l'élément d'arceau de montage (24),
- **en ce que** l'élément plat flexible (26) perméable à l'air est relié par sa zone de bord inférieure (27b) moulée par injection à l'élément de base (22),
- **en ce que** les zones de bord latérales supérieures s'étendant en oblique (28a) des sections plates latérales (28) sont fixées aux bras de montage (24b) par l'intermédiaire de baguettes de montage (30) moulées par injection et
- **en ce que** les zones de bord latérales inférieures (28b) des sections plates latérales (28) sont fixées aux branches latérales (22b) ou aux éléments latéraux solidaires de la carrosserie qui délimitent l'ouverture de toit par l'intermédiaire de baguettes de montage (30) moulées par injection.

2. Véhicule avec un déflecteur (20) selon la revendication 1, **caractérisé en ce que** la fixation des zones de bord latérales supérieures (28a) et des zones de bord latérales inférieures (28b) aux bras de montage (24b) ou aux branches latérales (22b) est configurée de manière inamovible.

3. Véhicule avec un déflecteur (20) selon la revendication 1, **caractérisé en ce que** les fixations des zones de bord latérales supérieures (28a) et des zones de bord latérales inférieures (28b) aux bras de montage (24b) ou aux branches latérales (24b) sont configurées de manière amovible par l'intermédiaire de liaisons par encliquetage, et les baguettes de montage (30) présentent à cet effet des sections de fixation qui comprennent un certain nombre de points d'encliquetage (32) qui s'engagent par encliquetage dans des points d'encliquetage opposés correspondants (36) sur les bras de montage (24b) ou les branches latérales (22b).

4. Procédé de fabrication d'un déflecteur selon l'une quelconque des revendications 1 à 3, comprenant les étapes suivantes :
- la fourniture de l'élément plat flexible (26) perméable à l'air,
- l'insertion et le positionnement de l'élément plat (26) dans un moule en deux parties pour un procédé de moulage par injection,
- la fermeture du moule et l'injection de matière plastique, l'élément de base (22) étant moulé par injection et la zone de bord inférieure (27b) de l'élément plat étant surmoulée par injection pour réaliser une liaison de matière,
- l'élément d'arceau de montage (24) est moulé par injection et la zone de bord supérieure (27a) de l'élément plat (26) est surmoulée par injection pour réaliser une liaison de matière,
- des baguettes de montage (30) avec des zones de fixation sont moulées par injection sur les zones de bord latérales supérieures s'étendant en oblique (28a) ainsi que sur les zones de bord latérales inférieures (28b).

5. Procédé de fabrication d'un déflecteur (20) selon la revendication 4, **caractérisé en ce que** les zones de fixation sont configurées pour réaliser une liaison par encliquetage amovible et comprennent un certain nombre de points d'encliquetage (30) et **en ce que** les branches latérales (22b) et les bras de montage (24b) sont fabriqués lors du moulage par injection avec des points d'encliquetage opposés correspondants (36).

6. Procédé de fabrication d'un déflecteur (20) selon la revendication 4, **caractérisé en ce que** les zones de fixation sont configurées pour réaliser une fixation inamovible entre les baguettes de montage (30) et les branches latérales (22b) ou les bras de montage (24b).
